# FASCICULE DE BREVET EUROPEEN

(11) **EP 1 537 989 B1**
(45) Date de publication et mention de la délivrance du brevet: **24.12.2014**
(21) Numéro de dépôt: 04292760.8
(22) Date de dépôt: 24.11.2004
(51) Int. Cl.: B32B 1/08, B32B 27/08

(54) **Utilisation d'un tuyau à base de polymère fluoré greffé par irradiation pour le transport d'essence en station service**
Verwendung eines Rohres aus gepfropftem Fluorpolymer, hergestellt durch Bestrahlung, für den Kraftstofftransport
Use of a tube comprising a fluoropolymer grafted by irradiation for the fuel transport in a gas station

(30) Priorité: 01.12.2003 FR 0314062
(43) Date de publication de la demande: 08.06.2005
(60) Demande divisionnaire: 06075800.0
(73) Titulaire: ARKEMA FRANCE, 92700 Colombes (FR)
(72) Inventeur: Bonnet, Anthony, 27170 Beaumont le Roger (FR); Chopinez, Fabrice, 27000 Evreux (FR); Sebire, Pascal, 27300 Saint-Aubin le Vertueux (FR); Werth, Michael, 27300 Bernay (FR); O'Brien, Gregory, Downingtown 19335 Pennsylvania (US); Zerafati, Saeid, 19085 Villanova PA Montgomery (US)

(56) Documents cités:
- EP-A2- 1 101 994
- US-A- 4 749 607
- US-B1- 6 517 657

## Description

### Domaine de l'invention

La présente invention concerne un tuyau à base de polymère fluoré sur lequel a été greffé par irradiation un monomère insaturé utilisé pour le transport d'essence en station service. Plus précisément, ce tuyau comprend au moins une couche de polymère fluoré sur lequel a été greffé par irradiation un monomère insaturé et au moins une couche de polyoléfine. Ces tuyaux sont utiles pour le transport d'essence en station service pour amener le fluide de la cuve de stockage au distributeur d'essence et du distributeur d'essence jusqu'à la voiture du client.

### L'art antérieur et le problème technique

Les polymères fluorés, par exemple ceux à base de fluorure de vinylidène CF₂=CH₂ (VDF) tels que le PVDF (polyfluorure de vinylidène) sont connus pour offrir d'excellentes propriétés de stabilité mécanique, une très grande inertie chimique, ainsi qu'une bonne résistance au vieillissement. Cependant, cette inertie chimique des polymères fluorés fait qu'il est difficile de les coller ou de les associer à d'autres matériaux.

Le brevet EP558373 décrit un tube pour le transport d'essence comprenant respectivement une couche extérieure en polyamide, une couche de liant et une couche intérieure en contact avec l'essence et constituée de polymère fluoré (avantageusement du PVDF, abréviation de polyfluorure de vinylidène). L'imperméabilité à l'essence est parfaite mais la tenue aux chocs n'est pas suffisante.

Les brevets EP696301**,** EP 740754 et EPEP 726926 décrivent des tubes pour le transport d'essence comprenant respectivement une couche extérieure en polyamide, une couche de liant, une couche de PVDF (polyfluorure de vinylidène), une couche de liant et une couche intérieure en polyamide en contact avec l'essence. L'imperméabilité et la tenue aux chocs sont très bonnes mais selon la nature du polyamide et le dispositif de coextrusion utilisé pour fabriquer ce tube, il peut être nécessaire d'ajouter un plastifiant dans la couche intérieure de polyamide. Il en résulte que ce plastifiant peut exsuder et être entrainé par l'essence ce qui peut provoquer un bouchage du tube ou du dispositif d'injection de l'essence dans le moteur.

Le brevet EP1243832 décrit un tube qui comprend une couche extérieure de polyamide, une couche constituée d'un mélange d'un fluoro polymère et d'un méthacrylate d'alcoyle possédant sur sa chaîne des fonctions réactives et une couche intérieure constituée d'un mélange à matrice polyamide et phase dispersée en polyoléfine en contact avec l'essence.

Le brevet US4749607 décrit un système multicouche comprenant une couche d'un polymère thermoplastique halogéné modifié et une couche d'une polyoléfine modifiée. Le polymère thermoplastique halogéné modifié peut être un polymère fluoré dans lequel des fonctions polaires ont été incorporées soit par copolymérisation directe soit par greffage chimique à l'aide d'un amorceur radicalaire. Le document EP 1101 994 décrit un tuyau comprenant au moins une couche intérieure formée de polymère fluoré et au moins une couche extérieure formée d'une résine thermoplastique.

Dans ces documents de l'art antérieur, il n'est pas décrit de couche de polymère fluoré sur lequel a été greffé par irradiation un monomère insaturé. De plus les tubes qui sont décrits, sont habituellement de diamètre extérieur 8 mm et comprennent une couche de polyamide et ils sont surtout utiles dans les automobiles pour amener l'essence du réservoir jusqu'au dispositif d'injection dans le moteur. Dans les stations service, il faut des tuyaux de plus gros diamètres et si on utilisait les tuyaux décrits dans l'art antérieur précédent, le coût de ces tuyaux serait trop élevé.

Par ailleurs, on sait maintenant produire des polymères fluorés sur lesquels a été greffé par irradiation un monomère insaturé et faire des structures dans lesquelles ces polymères fluorés modifiés sont de bons liants entre des polyoléfines et un polymère fluoré. Par la suite, un polymère fluoré sur lequel a été greffé par irradiation un monomère insaturé sera désigné pour simplifier par polymère fluoré greffé par irradiation.

Ces polymères fluorés greffés par irradiation peuvent aussi former une couche adhérente sur une polyoléfine, de sorte qu'on obtient une structure ayant une couche résistante chimiquement et en plus barrière sans ajouter une autre couche de polymère fluoré. L'utilisation de telles structures pour le transport d'essence en station service pour amener le fluide de la cuve de stockage au distributeur d'essence et du distributeur d'essence jusqu'à la voiture du client n'a pas été décrite dans l'art antérieur.

### Brève description de l'invention

La présente invention concerne l'utilisation pour le transport d'essence en station service pour amener le fluide de la cuve de stockage au distributeur d'essence et du distributeur d'essence jusqu'à la voiture du client d'un tuyau comprenant :
une couche intérieure en contact avec le fluide à transporter constituée de polymère fluoré greffé par irradiation et directement attachée à celle-ci, une couche extérieure de polyoléfine.

Selon une variante, la couche de polymère fluoré greffé par irradiation est remplacée par une couche d'un mélange de polymère fluoré greffé par irradiation et d'un PVDF homo- ou copolymère.

Dans le tuyau précédent, on peut disposer entre la couche de polymère fluoré greffé par irradiation (ou la couche contenant le polymère fluoré greffé par irradiation) et la (ou les) couche(s) de polyoléfine, une couche de polyoléfine fonctionnalisée ayant des fonctions capables de réagir avec les fonctions greffées par irradiation sur le polymère fluoré. Par exemple, si on a greffé par irradiation de l'anhydride maléique sur le polymère fluoré, la couche de polyoléfine fonctionnalisée est constituée d'un copolymère de l'éthylène, du méthacrylate de glycidyle et éventuellement d'un acrylate d'alkyle éventuellement en mélange avec du polyéthylène.

Dans la structure précédente, la couche intérieure en contact avec le fluide à transporter peut contenir du noir de carbone, des nanotubes de carbone ou tout autre additif capable de la rendre conductrice pour éviter l'accumulation d'électricité statique.

Ce tuyau peut être fabriqué par coextrusion, cette technique est connue en elle-même.

### Description détaillée de l'invention

**S'agissant du polymère fluoré,** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VDF); le trifluoroéthylène (VF₃); le chlorotrifluoroéthylène (CTFE); le 1,2-difluoroethylene; le tetrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD); le produit de formule CF₂=CFOCF₂CF(CF₃)OCF₂CF₂X dans laquelle X est SO₂F, CO₂H, CH₂OH, CH₂OCN ou CH₂0PO₃H; le produit de formule CF₂=CFOCF₂CF₂SO₂F; le produit de formule F(CF₂)nCH₂0CF=CF₂ dans laquelle n est 1, 2, 3, 4 or 5; le produit de formule R₁CH₂OCF=CF₂ dans laquelle R₁ est l'hydrogène ou F(CF₂)z et z vaut 1, 2, 3 ou 4; le produit de formule R₃OCF=CH₂ dans laquelle R₃ est F(CF₂)z- et z est 1, 2, 3 or 4; le perfluorobutyl éthylène (PFBE); le 3,3,3-trifluoropropène et le 2-trifluorométhyl-3 ,3 ,3 -trifluoro-1 propène.

Le polymère fluoré peut être un homopolymère ou un copolymère, il peut aussi comprendre des monomères non fluorés tels que l'éthylène.

A titre d'exemples, le polymère fluoré est choisi parmi :
- les homo- et copolymères du fluorure de vinylidène (VDF) contenant de préférence au moins 50% en poids de VDF, le copolymère étant choisi parmi le chlorotrifluoroéthylène (CTFE), l'hexafluoropropylène (HFP), le trifluoroéthylène (VF₃) et le tétrafluoroéthylène (TFE),
- les homo- et copolymères du trifluoroéthylène (VF₃),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF₃.

Avantageusement le polymère fluoré est du poly(fluorure de vinylidène) (PVDF) homopolymère ou copolymère. De préférence le PVDF contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 2000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et à l'injection. De préférence, le PVDF a une viscosité allant de 300 Pa.s à 1200 Pa.s, la viscosité étant mesurée à 230°C, à un gradient de cisaillement de 100 s⁻¹ à l'aide d'un rhéomètre capillaire.

Ainsi, les PVDF commercialisés sous la marque KYNAR^{®} 710 ou 720 sont parfaitement adaptés pour cette formulation.

**S'agissant du polymère fluoré greffé par irradiation,** celui-ci est obtenu par un procédé de greffage par irradiation d'un monomère insaturé sur un polymère fluoré.

Le polymère fluoré est au préalable mélangé au monomère insaturé par toutes les techniques de mélange en milieu fondu connues de l'art antérieur. L'étape de mélange s'effectue dans tout dispositif de mélange tel que des extrudeuses ou des malaxeurs utilisés dans l'industrie des thermoplastiques. De préférence, on utilisera une extrudeuse pour mettre le mélange sous forme de granulés.

Puis, le mélange du polymère fluoré et du monomère insaturé est irradié à l'état solide à l'aide d'une source électronique ou photonique sous une dose d'irradiation comprise entre 10 et 200 kGray, de préférence entre 10 et 150 kGray. L'irradiation grâce à une bombe au cobalt 60 est particulièrement préféré.

Il en résulte un greffage du monomère insaturé à hauteur de 0,1 à 5% en poids (c'est-à-dire que le monomère insaturé greffé correspond à 0,1 à 5 parts pour 99,9 à 95 parts de polymère fluoré), avantageusement de 0,5 à 5%, de préférence de 1 à 5%. La teneur en monomère insaturé greffé dépend de la teneur initiale du monomère insaturé dans le mélange polymère fluoré / monomère insaturé à irradier. Elle dépend aussi de l'efficacité du greffage, donc de la durée et de l'énergie de l'irradiation.

Le monomère insaturé qui n'a pas été greffé ainsi que les résidus libérés par le greffage notamment le HF sont ensuite éliminés. Cette opération peut être réalisée selon les techniques connues de l'homme de l'art. Un dégazage sous vide peut être appliqué, éventuellement en appliquant en même temps un chauffage. Il est également possible de dissoudre le polymère fluoré modifié dans un solvant adéquat tel que par exemple la N-méthyl pyrrolidone, puis de précipiter le polymère dans un non-solvant, par exemple dans l'eau ou bien dans un alcool.

C'est là l'un des avantages de ce procédé de greffage par irradiation que de pouvoir obtenir des teneurs en monomère insaturé greffé plus élevées qu'avec les procédés de greffage classiques utilisant un amorceur radicalaire. Ainsi, typiquement, avec le procédé de greffage par irradiation, il est possible d'obtenir des teneurs supérieures à 1% (1 part de monomère insaturé pour 99 parts du polymère fluoré), voire même supérieure à 1,5%, alors qu'avec un procédé de greffage classique en extrudeuse, la teneur est de l'ordre de 0,1 à 0,4%.

D'autre part, le greffage par irradiation a lieu à « froid », typiquement à des températures inférieures à 100°C, voire 70°C, de sorte que le mélange du polymère fluoré et du monomère insaturé n'est pas à l'état fondu comme pour un procédé de greffage classique en extrudeuse. Une différence essentielle est donc que, dans le cas d'un polymère fluoré semi-cristallin (comme c'est le cas avec le PVDF par exemple), le greffage a lieu dans la phase amorphe et non dans la phase cristalline alors qu'il se produit un greffage homogène dans le cas d'un greffage en extrudeuse à l'état fondu. Le monomère insaturé ne se répartit donc pas identiquement sur les chaînes du polymère fluoré dans le cas du greffage par irradiation et dans le cas du greffage en extrudeuse. Le produit fluoré modifié présente donc une répartition différente du monomère insaturé sur les chaînes du polymère fluoré par rapport à un produit qui serait obtenu par un greffage en extrudeuse.

Durant cette étape de greffage, il est préférable d'éviter la présence d'oxygène. Un balayage à l'azote ou à l'argon du mélange polymère fluoré / monomère insaturé est donc possible pour éliminer l'oxygène.

Le polymère fluoré greffé par irradiation ainsi obtenu peut être utilisé tel quel ou en mélange soit avec le même polymère fluoré mais non greffé par irradiation soit avec un autre polymère fluoré soit avec un autre polymère tel que par exemple un polymère acrylique. A titre d'exemple de polymère acrylique on peut citer le PMMA et les modifiants choc de type core shell (coeur écorce).

Le polymère fluoré greffé par irradiation présente toutes les caractéristiques du polymère fluoré avant modification, notamment sa très bonne résistance chimique et sa très bonne résistance à l'oxydation, ainsi que sa tenue thermomécanique. De plus, les polymères modifiés suivant le procédé de la présente invention ont des propriétés d'adhésion fortement augmentées par rapport aux polymères fluorés non modifiés.

**S'agissant du monomère insaturé,** celui-ci possède au moins une double liaison C=C ainsi qu'au moins une fonction polaire qui est une fonction anhydride d'acide carboxylique.

Des mélanges de plusieurs monomères insaturés sont également envisageables.

Les anhydrides des acides dicarboxyliques insaturés ayant 4 à 10 atomes de carbone sont des monomères de greffage particulièrement préférés.

Citons à titre d'exemples de monomères insaturés l'anhydride maleïque, l'anhydride dichloromaléïque, l'anhydride difluoromaléïque, l'anhydride itaconique et l'anhydride crotonique.

De préférence, pour obtenir une bonne adhésion, on choisira l'anhydride maléïque. Ces monomères insaturés présentent de plus l'avantage d'être solides ce qui facilite leur introduction dans une extrudeuse. L'anhydride maléïque est tout particulièrement préféré car il permet d'obtenir de bonnes propriétés d'adhérence.

De par la présence d'une double liaison C=C sur le monomère insaturé, il n'est pas exclu que le monomère insaturé polymérise pour donner des chaînes de polymère soit greffées sur le polymère fluoré, soit libres c'est-à-dire non-attachées au polymère fluoré. On entend par chaîne de polymère un enchaînement de plus de 10 unités du monomère insaturé. Dans le cadre de l'invention, afin de favoriser les propriétés d'adhésion du polymère fluoré, il est préférable de limiter la présence de chaînes de polymère greffées ou libres, donc de chercher à obtenir des chaînes de moins de 10 unités du monomère insaturé. De préférence, on se limitera à des chaînes de moins de 5 unités du monomère insaturé, et de manière encore plus préférée de moins de 2 unités de monomère insaturé.

De même, il n'est pas exclu qu'il y ait plus d'une double liaison C=C sur le monomère insaturé. Cependant, la présence de plus d'une double liaison dans ces composés peut conduire à une réticulation du polymère fluoré, donc à une modification des propriétés rhéologiques voire même à la présence de gels, ce qui n'est pas souhaité. Il peut alors être difficile d'obtenir un bon rendement du greffage tout en limitant la réticulation. Aussi, les monomères insaturés ne contenant qu'une seule double liaison C=C sont préférés. Les monomères insaturés préférés sont donc ceux possédant une seule double liaison C=C et au moins une fonction polaire.

De ce point de vue, l'anhydride maléïque constitue un bon composé greffable car il a peu tendance à polymériser ni même à donner lieu à une réticulation. L'anhydride maléïque est tout particulièrement préféré.

S'agissant des proportions du polymère fluoré et du monomère insaturé la proportion de polymère fluoré est avantageusement, en poids, de 90 à 99,9% pour respectivement 0,1 à 10% de monomère insaturé. De préférence la proportion de polymère fluoré est de 95 à 99,9% pour respectivement 0,1 à 5% de monomère insaturé.

A l'issue de l'étape de mélange, on constate que le mélange du polymère fluoré et du monomère insaturé a perdu environ de 10 à 50% du monomère insaturé qu'on avait introduit au début de l'étape de mélange. Cette proportion dépend de la volatilité et de la nature du monomère insaturé. En fait le monomère a été dégazé dans l'extrudeuse ou le mélangeur et il est recupéré dans les circuits d'évents.

S'agissant de l'étape de greffage proprement dite, les produits récupérés à l'issue de l'étape de mélange sont avantageusement conditionnés en sacs de polyéthylène et l'air est chassé puis ils sont fermés. Quant à la méthode d'irradiation, on pourra utiliser sans distinction l'irradiation électronique plus connue sous la dénomination irradiation béta et l'irradiation photonique plus connue sous la dénomination irradiation gamma. Avantageusement la dose est comprise entre 2 et 6 Mrad et de préférence entre 3 et 5 Mrad.

S'agissant de l'étape d'élimination du monomère insaturé non greffé et des résidus libérés par le greffage, il est possible d'utiliser toute technique connue de l'homme de l'art. La proportion de monomère greffé par irradiation par rapport au monomère présent au début de l'étape de mélange est comprise entre 50 et 100%. On peut laver avec des solvants inertes vis-à-vis du polymère fluoré et des fonctions greffées par irradiation. Par exemple, quand on greffe de l'anhydride maléique on peut laver au chlorobenzène. On peut aussi plus simplement dégazer en mettant sous vide le produit récupéré à l'issue de l'étape de greffage, éventuellement en chauffant.

**On décrit maintenant les tuyaux utilisés dans l'invention.** Ces tuyaux peuvent être de toutes tailles, avantageusement le diamètre extérieur est entre 10 et 100 mm et l'épaisseur entre 1 et 5 mm. Le polymère fluoré qu'on peut mélanger au polymère fluoré greffé par irradiation est avantageusement du PVDF homopolymère ou copolymère. Les proportions en poids peuvent être de 1 à 90% de PVDF et de façon préférable de 20 à 60%. La couche de polymère fluoré qu'on peut ajouter contre la couche de polymère fluoré greffé par irradiation est avantageusement en PVDF homopolymère ou copolymère. La couche de polyoléfine peut être en polyéthylène ou en polypropylene. Avantageusement c'est du PEHD. A titre d'exemple, on peut citer le FINATHENE 3802 de la société ATOFINA, sa densité est de 0,938, et présente un MVI (Melt Volume Index ou indice de fluidité en volume à l'état fondu) de 0,2 cm³/10 min (190°C - 2,16 kg). Quant à la couche de polyoléfine fonctionnelle qui est insérée entre la couche de polymère fluoré greffé par irradiation et la couche de polyoléfine c'est une polyoléfine contenant un époxyde puisque le polymère fluoré greffé par irradiation est greffé par un anhydride.

Cette polyoléfine fonctionnelle est soit un copolymère de l'éthylène et d'un époxyde insaturé soit une polyoléfine greffée par un époxyde insaturé.

S'agissant de la polyoléfine greffée par un époxyde insaturé, on entend par polyoléfine les polymères comprenant des motifs oléfines tels que par exemple des motifs éthylène, propylène, butène-1 ou tout autre alpha-oléfine. A titre d'exemple, on peut citer
- les polyéthylènes tels que les LDPE, HDPE, LLDPE ou VLDPE, le polypropylène, les copolymères éthylène / propylène, les EPR (éthylène / propylène rubber) ou encore les PE métallocènes (copolymères obtenus par catalyse monosite),
- les copolymères de l'éthylène avec au moins un produit choisi parmi les sels ou les esters d'acides carboxyliques insaturés, ou les esters vinyliques d'acides carboxyliques saturés.
Il pourra s'agir aussi de copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylène-propylène / styrène, les éthylène / propylène / diène (EPDM).

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, l'indice de fluidité (MFI) peut être compris entre 0,3 et 40 (en g/10 min à 190°C sous 2,16 kg).

S'agissant des copolymères de l'éthylène et d'un époxyde insaturé on peut citer par exemple les copolymères de l'éthylène d'un (méth)acrylate d'alkyle et d'un époxyde insaturé ou les copolymères de l'éthylène, d'un ester vinylique d'acide carboxylique saturé et d'un époxyde insaturé. La quantité époxyde peut être jusqu'à 15 % en poids du copolymère et la quantité d'éthylène d'au moins 50 % en poids. Avantageusement, la proportion d'époxyde est comprise entre 2 et 10% en poids. Avantageusement la proportion de (méth)acrylate d'alkyle est comprise entre 0 et 40% en poids et de préférence entre 5 et 35% en poids.

Avantageusement, c'est un copolymère de l'éthylène d'un (méth)acrylate d'alkyle et d'un époxyde insaturé.

De préférence le (méth)acrylate d'alkyle est tel que l'alkyle possède 2 à 10 atomes de carbone.

Le MFI (indice de fluidité à l'état fondu) peut être par exemple entre 0,1 et 50 (g/10 min à 190°C sous 2,16 kg).

Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle. Des exemples d'époxydes insaturés utilisables sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-I-glycidyléther, le cyclohexène-4,5-diglycidylcarboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

### Exemples

On a utilisé les polymères fluorés suivants :
**Kynar® 720 :** PVDF homopolymère de la société ATOFINA et de MVI (Melt Volume Index ou indice de fluidité en volume à l'état fondu) 10 cm³/10 min (230°C , 5kg).
**Kynar® ADX 120 :** PVDF homopolymère greffé par irradiation par l'anhydride maléique (contenant 0,6% d'anhydride) et vendu par ATOFINA et de MVI (Melt Volume Index ou indice de fluidité en volume à l'état fondu) 7 cm³/10 min (230°C, 5 kg).

### Préparation de l'ADX 120

On prépare un mélange de PVDF Kynar^{®} 720 de la société ARKEMA et de 1,2% en masse d'anhydride maléique. Ce mélange est préparé en utilisant une extrudeuse bi-vis fonctionnant à 230°C et 150 tr/minute à un débit de 10 kg/h. Le produit granulé ainsi préparé et ensaché dans des sacs étanches en aluminium, puis l'oxygène est éliminé à l'aide d'un balayage avec un courant d'argon. Ces sacs sont ensuite irradiés par un rayonnement gamma (bombe au Cobalt 60) sous 3 Mrad (accélération de 10 MeV) pendant 17 heures. Un taux de greffage de 50 % est déterminé, ce taux est vérifié après une étape de solubilisation dans la N-méthyl pyrrolidone puis précipitation dans un mélange eau/THF (50/50 en poids). Le produit obtenu après l'opération de greffage est alors placé sous vide pendant une nuit à 130°C pour évacuer l'anhydride maléique résiduel et l'acide fluorhydrique libéré lors de l'irradiation.

La teneur finale en anhydride maléïque greffé est de 0,6% (analyse par spectroscopie infrarouge sur la bande C=0 vers 1870 cm⁻¹).

On a utilisé la polyoléfine fonctionnelle suivante :
**Lotader® 8840 :** copolymère de l'éthylène et du méthacrylate de glycidyle de la société ATOFINA et de MVI (Melt Volume Index ou indice de fluidité en volume à l'état fondu) 5 cm³/10 min (à 190°C sous 2,16 kg). Il contient 92% d'éthylène et 8% de méthacrylate de glycidyle en poids.

On a utilisé le polyéthylène suivant :
**PEHD 2040ML55 :** désigne un polyéthylène haute densité de la société ATOFINA de MFI 4 g/10 minute sous 2,16 kg à 190°C. Sa densité est de 0,955.

### Exemple 1 (suivant l'invention) :

Sur une ligne de coextrusion Mc Neil, on réalise une coextrusion d'une structure tricouche constituée de l'extérieur vers l'intérieur de PEHD 2040ML55 (2,6 mm) coextrudée sur une couche avec du LOTADER 8840 (100 µm) et une couche de Kynar ADX 120 (300 µm). Le tube obtenu de diamètre 32 mm et d'épaisseur 3 mm présente une interface non pelable entre le LOTADER et le PEHD et une adhésion de 60 N/cm entre le LOTADER et le Kynar ADX 120. Cette structure tricouche ne pose aucun problème de coextrusion. Après un vieillissement dans l'essence M15 à 60°C pendant 1 mois aucune décohésion n'est observée et une force de pelage de 25 N/cm peut être mesurée.

### Exemple 2 (comparatif) :

Sur une ligne de coextrusion Mc Neil, on réalise une coextrusion d'une structure tricouche constituée de l'extérieur vers l'intérieur de PEHD 2040ML55 (2,6 mm) coextrudée sur une couche avec du Lotader 8840 (100 µm) et une couche de Kynar 720 (300 µm). Le tube obtenu de diamètre 32 mm et d'épaisseur 3 mm présente une interface non pelable entre le LOTADER et le PEHD et une adhésion de 1 N/cm entre le LOTADER et le Kynar 720. Cette structure tricouche ne pose aucun problème de coextrusion. Après 30 minutes de stockage à température ambiante une délamination spontanée apparaît entre le PVDF et le LOTADER.

### Exemple 3 (selon l'invention) :

Sur une ligne de coextrusion Mc Neil, on réalise une coextrusion d'une structure 4 couches constituée de l'extérieur vers l'intérieur de PEHD 2040ML55 (2,6 mm) coextrudée sur une couche avec du Lotader 8840 (100 µm) et une couche de Kynar ADX 120 (100 µm) et d'une couche de Kynar 720 (200µm). Le tube obtenu de diamètre 32 mm et d'épaisseur 3 mm présente une interface non pelable entre le LOTADER et le PEHD, une adhésion de 60 N/cm entre le LOTADER et le Kynar ADX 120 et une interface non pelable entre le Kynar ADX 120 et le Kynar 720 . Cette structure à 4 couches ne pose aucun problème de coextrusion. Après un vieillissement dans l'essence M15 à 60°C pendant 1 mois aucune décohésion n'est observée et une force de pelage de 25 N/cm peut être mesurée à l'interface LOTADER / Kynar ADX 120.

### Exemple 4 (selon l'invention) :

Sur une ligne de coextrusion Mc Neill, on réalise une coextrusion d'une structure 5 couches constituée de l'extérieur vers l'intérieur de Kynar ADX 120 ( 200 µm), de Lotader 8840 (100 µm), de PEHD 2040ML55 (2,4 mm) coextrudée sur une couche avec du Lotader 8840 (100 µm) et une couche de Kynar AD-X120 (200 µm). Le tube obtenu de diamètre 32 mm et d'épaisseur 3 mm présente une interface non pelable entre le LOTADER et le PEHD, une adhésion de 40 N/cm entre le LOTADER et le Kynar ADX 120 externe et une force de pelage de 55 N/cm entre le Lotader et le Kynar ADX 120 interne. Cette structureà 5 couches ne pose aucun problème de coextrusion. Après un vieillissement dans l'essence M15 à 60°C pendant 1 mois aucune décohésion n'est observée et une force de pelage de 15 N/cm peut être mesurée à l'interface Lotader / Kynar ADX 120 externe et une adhésion de 24 N/cm peut être mesurée à l'interface Lotader / Kynar ADX 120 interne.

### Exemple 5 (selon l'invention) :

Sur une ligne de coextrusion Mc Neil, on réalise une coextrusion d'une structure tricouche constituée de l'extérieur vers l'intérieur de Kynar ADX 120 (150 µm) d'un mélange PE Stamylex 1016 LF (LLDPE de MFI 1,1 g/10min à 190°C sous 2, 16 kg) / Lotader 8840 en proportions en poids 50-50 (d'épaisseur 2,7 mm) et d'une nouvelle couche de Kynar ADX 120 (150 µm) Le tube obtenu de diamètre 32 mm et d'épaisseur 3 mm présente une adhésion de 35 N/cm. Entre le Kynar ADX 120 externe et le mélange PE/Lotader et une adhésion de 45N/cm entre le Kynar ADX 120 interne et le mélange PE/Lotader. Cette structure tricouche ne pose aucun problème de coextrusion. Un vieillissement dans l'essence M15 à 60°C montre qu'aucune décohésion n'est observée. Cette structure présente une prise en masse dans l'essence inférieure à 1 % après 1 mois.

## Revendications

1. Utilisation pour le transport d'essence en station service pour amener le fluide de la cuve de stockage au distributeur d'essence et du distributeur d'essence jusqu'à la voiture du client d'un tuyau comprenant :
• une couche intérieure en contact avec le fluide à transporter constituée :
o soit d'un polymère fluoré sur lequel a été greffé par irradiation un monomère anhydride insaturé,
o soit du mélange d'un polymère fluoré sur lequel a été greffé par irradiation un monomère anhydride insaturé et d'un PVDF homo- ou copolymère,
• une couche extérieure de polyoléfine, et
• une couche de polyoléfine fonctionnalisée, placée entre la couche intérieure et la couche extérieure, ladite polyoléfine fonctionnalisée étant soit un copolymère de l'éthylène et d'un époxyde insaturé soit une polyoléfine greffée par un époxyde insaturé.

2. Utilisation selon la revendication 1 dans laquelle le monomère anhydride insaturé est un anhydride d'acide carboxylique insaturé et possède au moins une double liaison C=C.

3. Utilisation selon la revendication 2 dans laquelle le monomère anhydride insaturé ne possède qu'une seule double liaison C=C.

4. Utilisation selon la revendication 3 dans laquelle le monomère anhydride insaturé est l'anhydride maléique.

5. Utilisation selon l'une quelconque des revendications précédentes dans laquelle la couche intérieure en contact avec le fluide à transporter peut contenir du noir de carbone, des nanotubes de carbone ou tout autre additif capable de la rendre conductrice pour éviter l'accumulation d'électricité statique.

6. Utilisation selon l'une quelconque des revendications précédentes dans laquelle ledit tuyau a un diamètre extérieur compris entre 10 et 100 mm et une épaisseur entre 1 et 5 mm.

7. Utilisation selon l'une quelconque des revendications précédentes dans laquelle ladite polyoléfine greffée par un époxyde insaturé est choisie parmi les polyéthylènes, le polypropylène, les copolymères éthylène-propylène, les EPR (étthylène-polypropylène rubber), les polyéthylènes métallocènes, les copolymères de l'éthylène avec au moins un produit choisi parmi les sels ou les esters d'acides carboxyliques insaturés, ou les esters vinyliques d'acides carboxyliques saturés, les copolymères blocs styrène/éthylène-butène/styrène, les copolymères blocs styrène/butadiène/styrène, les copolymères blocs styrène/isoprène/styrène, les copolymères blocs styrène/ éthylène-propylène/styrène et les copolymères blocs éthylène/propylène/diène.

8. Utilisation selon la revendication 7 dans laquelle la polyoléfine est choisie parmi le LLDPE, le VLDPE, le polypropylène, les copolymères éthylène/acétate de vinyle et les copolymères éthylène/(méth)acrylate d'alkyle.

9. Utilisation selon l'une quelconque des revendications précédentes dans laquelle ledit copolymère d'éthylène et d'un époxyde insaturé est choisi parmi les copolymères de l'éthylène d'un (méth)acrylate d'alkyle et d'un époxyde insaturé et les copolymères de l'éthylène, d'un ester vinylique d'acide carboxylique saturé et d'un époxyde insaturé.

10. Utilisation selon l'une des revendications 8 ou 9 dans laquelle les acrylates ou méthacrylates d'alkyle sont choisis parmi le méthacrylate de méthyle, l'acrylate d'éthyle, l'acrylate de n-butyle, l'acrylate d'isobutyle et l'acrylate de 2-éthylhexyle.

11. Utilisation selon l'une quelconque des revendications précédentes dans laquelle ledit époxyde insaturé est choisi parmi les esters et éthers de glycidyle aliphatiques tels que l'allylglycidyléther, le vinylglycidyléther, le maléate et l'itaconate de glycidyle, l'acrylate et le méthacrylate de glycidyle, et les esters et éthers de glycidyle alicycliques tels que le 2-cyclohexène-1-glycidyléther, le cyclohexène-4,5-diglycidylcarboxylate, le cyclohexène-4-glycidylcarboxylate, le 5-norbornène-2-méthyl-2- glycidylcarboxylate et l'endocisbicyclo(2,2,1)-5-heptène-2,3-diglycidylcarboxylate.

## Patentansprüche

1. Verwendung einer Rohrleitung zum Transport von Kraftstoff an einer Tankstelle, um das Fluid aus einem Vorratstank zur Tanksäule und von der Tanksäule bis zum Kraftfahrzeug des Kunden zu leiten, die aufweist:
• eine mit dem zu transportierenden Fluid in Kontakt stehende Innenschicht, bestehend aus:
o entweder einem fluorierten Polymer, auf das durch Bestrahlung ein ungesättigtes Anhydridmonomer gepfropft wurde,
∘ oder einem Gemisch aus einem fluorierten Polymer, auf das durch Bestrahlung ein ungesättigtes Anhydridmonomer gepfropft wurde, und einem PVDF-Homopolymer oder PVDF-Copolymer,
• eine äußere Polyolefinschicht, und
• eine Schicht aus einem funktionalisierten Polymer, die zwischen der Innenschicht und der äußeren Schicht angeordnet ist, wobei das funktionalisierte Polymer entweder ein Copolymer aus Ethylen und einem ungesättigten Epoxid oder ein mit einem ungesättigten Epoxid gepfropftes Polyolefin ist.

2. Verwendung nach Anspruch 1, worin das ungesättigte Anhydrid-monomer ein Anhydrid einer ungesättigten Carbonsäure ist und zumindest eine Doppelbindung C=C aufweist.

3. Verwendung nach Anspruch 2, worin das ungesättigte Anhydrid-monomer nur eine einzige Doppelbindung C=C aufweist.

4. Verwendung nach Anspruch 3, worin es sich bei dem ungesättigten Anhydridmonomer um Maleinsäureanhydrid handelt.

5. Verwendung nach einem der vorhergehenden Ansprüche, worin die mit dem zu transportierenden Fluid in Kontakt stehende Innenschicht Ruß, Kohlenstoff-Nanoröhrchen oder ein beliebiges anderes Additiv enthalten kann, dass sie leitfähig machen kann, um eine Akkumulation von statischer Elektrizität zu vermeiden.

6. Verwendung nach einem der vorhergehenden Ansprüche, worin die Rohrleitung einen Außendurchmesser zwischen 10 und 100 mm und eine Dicke zwischen 1 und 5 mm aufweist.

7. Verwendung nach einem der vorhergehenden Ansprüche, worin das mit einem ungesättigten Epoxid gepfropfte Polyolefin unter Polyethylenen, Polypropylen, Ethylen/Propylen-Copolymeren, EPR (Ethylen-Propylen-Kautschuk), Metallocen-Polyethylenen, Copolymeren von Ethylen und mindestens einem Produkt, das unter den Salzen oder Estern von ungesättigten Carbonsäuren ausgewählt ist, Vinylestern gesättigter Carbonsäuren, Styrol/Ethylen-Buten/Styrol-Blockcopolymeren, Styrol/Buta-dien/Styrol-Blockcopolymeren, Styrol/Isopren/Styrol-Blockco-polymeren, Styrol/Ethylen-Propylen/Styrol-Blockcopolymeren und Ethylen/Propylen/Dien-Blockcopolymeren ausgewählt ist.

8. Verwendung nach Anspruch 7, worin das Polyolefin unter LLDPE, VLDPE, Polypropylen, Ethylen/Vinylacetat-Copolymeren und Ethylen/Alkyl(meth)acrylat-Copolymeren ausgewählt ist.

9. Verwendung nach einem der vorhergehenden Ansprüche, worin das Copolymer aus Ethylen und einem ungesättigten Epoxid unter den Copolymeren von Ethylen, einem Alkyl(meth)acrylat und einem ungesättigten Epoxid und den Copolymeren von Ethylen, einem Vinylester einer gesättigten Carbonsäure und einem ungesättigten Epoxid ausgewählt ist.

10. Verwendung nach einem der Ansprüche 8 oder 9, worin die Alkylacrylate oder Alkylmethacrylate unter Methylmethacrylat, Ethylacrylat, n-Butylacrylat, Isobutylacrylat und 2-Ethylhexylacrylat ausgewählt sind.

11. Verwendung nach einem der vorhergehenden Ansprüche, worin das ungesättigte Epoxid unter aliphatischen Glycidylethern oder Glycidylestern, wie Allylglycidylether, Vinylglycidylether, Glycidylmaleat und Glycidylitaconat, Glycidylacrylat und Glycidylmethacrylat, und alicyclischen Glycidylethern oder Glycidylestern, wie 2-Cyclohexen-1-gylcidylether, Cyclohexen-4,5-diglycidylcarboxylat, Cyclohexen-4-glycidylcarboxylat, 5-Norbornen-2-methyl-2-glycidylcarboxylat und endo-cis-Bicyclo(2.2.1)-5-hepten-2,3-diglycidylcarboxylat, ausgewählt ist.

## Claims

1. Use for transporting petrol in a service station in order to convey the fluid from the storage tank to the petrol dispenser and from the petrol dispenser into the customer's car of a hose comprising:
- an inner layer in contact with the fluid to be transported, consisting:
• either of a fluoropolymer onto which an unsaturated anhydride monomer has been irradiation-grafted, or
• of a blend of a fluoropolymer onto which an unsaturated anhydride monomer has been irradiation-grafted and of PVDF homopolymer or copolymer,
- a polyolefin outer layer, and
- a layer of a functionalized polyolefin placed between the inner layer and outer layer, said functionalized polyolefin being either an ethylene/unsaturated epoxide copolymer or a polyolefin grafted with an unsaturated epoxide.

2. Use according to Claim 1, in which the unsaturated anhydride monomer is an unsaturated carboxylic acid anhydride and possesses at least a C=C double bond.

3. Use according to Claim 2, in which the unsaturated anhydride monomer possesses only a single C=C double bond.

4. Use according to claim 3 in which the unsaturated anhydride monomer is maleic anhydride.

5. Use according to any one of the preceding claims, in which the inner layer in contact with the fluid to be transported may contain carbon black, carbon nanotubes or any other additive capable of making it conductive in order to prevent the accumulation of static electricity.

6. Use according to any one of the preceding claims, in which said hose has an outside diameter between 10 and 100 mm and a thickness between 1 and 5 mm.

7. Use according to any one of the preceding claims, in which said functionalized polyolefin grafted with an unsaturated epoxide is selected among polyethylenes, polypropylene, ethylene/propylene copolymers, EPRs (ethylene/propylene rubbers), metallocene polyethylenes, copolymers of ethylene with at least one product chosen from salts or esters of unsaturated carboxylic acids, or vinyl esters of saturated carboxylic acids, styrene/ethylene-butylene/styrene block copolymers, styrene/ butadiene/styrene block copolymers, styrene/ isoprene/styrene block copolymers, styrene/ ethylenepropylene/styrene block copolymers and ethylene/propylene/diene copolymers.

8. Use according to claim 7 in which said polyolefin is chosen among LDPE, VLDPE, polypropylene, ethylene/vinyl acetate copolymers and ethylene/alkyl (meth)acrylate copolymers.

9. Use according to any one of the preceding claims, in which said ethylene/unsaturated epoxide copolymer is chosen among copolymers of ethylene with an alkyl (meth)acrylate and an unsaturated epoxide and copolymers of ethylene with a vinyl ester of a saturated carboxylic acid and with an unsaturated epoxide.

10. Use according to any of claims 8 or 9 in which alkyl acrylates or alkyl methacrylates are chosen among methyl methacrylate, ethyl acrylate, n-butyl acrylate, isobutyl acrylate and 2-ethylhexyl acrylate.

11. Use according to any one of the preceding claims, in which said unsaturated epoxide is chosen among:
- aliphatic glycidyl esters and ethers such as allyl glycidyl ether, vinyl glycidyl ether, glycidyl maleate, glycidyl itaconate, glycidyl acrylate and glycidyl methacrylate; and
- alicyclic glycidyl esters and ethers such as 2-cyclohexen-1-yl glycidyl ether, diglycidyl cyclohexene-4,5-carboxylate, glycidyl cyclohexene-4-carboxylate, glycidyl 2-methyl-5-norbornene-2-carboxylate and diglycidyl endo-cis-bicyclo[2,2,1]-hept-5-ene-2,3-dicarboxylate.
